# EUROPÄISCHE PATENTANMELDUNG

(11) **EP 0 913 984 A2**
(43) Veröffentlichungstag der Anmeldung: **06.05.1999**
(21) Anmeldenummer: 98440226.3
(22) Anmeldetag: 16.10.1998
(51) Int. Cl.: H04M 11/06, H04Q 11/04, H04M 1/72

(54) **Digitales Telekommunikations-System mit DECT-Interface für Fax- und Datenanwendungen**

(30) Priorität: 28.10.1997 DE 19747534
(71) Anmelder: ALCATEL, 75008 Paris (FR)
(72) Erfinder: Geywitz, Klaus, 70839 Gerlingen (DE)
(74) Vertreter: Müller, Joachim, Dipl.-Ing.

(57) **Zusammenfassung**

Ein digitales Telekommunikations(TK)-System mit mindestens einer DECT-Steuereinheit (1), die mindestens eine DECT-Basisstation (4) steuert und auf der eine Vermittlungseinheit (2) implementiert ist, ist dadurch gekennzeichnet, daß auf der DECT-Steuereinheit (1) ein Filter (3) zur Filterung von Zieladressen von Datenpaketen implementiert ist, welches Routing-Information an die Vermittlungseinheit (2) liefert, und daß mindestens zwei Datenendgeräte (9, 9'), insbesondere Personal Computer (PC), vorgesehen sind, von denen mindestens eines über eine drahtlose Verbindung (8, 8') mit der DECT-Basisstation (4) kommunizieren kann. Damit können beispielsweise in einer Anlage vom Typ "ALCATEL 4200 E" auch LAN-Funktionen, insbesondere WLAN-Funktionen im Punkt-zu-Multipunkt-Verbindungsverfahren mit drahtloser Datenübertragung ermöglicht werden.

## Beschreibung

Die Erfindung betrifft ein Digitales Telekommunikations (TK)-System mit mindestens einer DECT (= digital enhanced cordless telephone) Steuereinheit, die mindestens eine DECT-Basisstation steuert und auf der eine Vermittlungseinheit implementiert ist.

Ein solches System ist beispielsweise bekannt aus der Firmendruckschrift zur Anlage "Alcatel 4200 E" vom Früh jahr 1997.

Telekommunikationssysteme mit zumindest teilweise drahtloser Signalübertragung sind in großer Zahl konkurrierend auf dem Markt erhältlich. Das System "Alcatel 4200 E" ist ein derartiges digitales TK-System mit der Möglichkeit der Datenübertragung nach intern und extern, drahtgebunden über ISDN. Dabei besteht unter anderem auch die Anschlußmöglichkeit drahtloser Sprachendgeräte über DECT. Die Signalübertragung in diesem System erfolgt jedoch prinzipiell nur im Punkt-zu-Punkt-Modus, also jeweils nur von einem an das System angeschlossenen Endgerät zu einem bestimmten, gegebenenfalls über ein Fernmeldenetz mit dem System kommunizierenden anderen Endgerät. Die Datenübertragung zwischen Datenendgeräten im Punkt-zu-Multipunkt-Verbindungsmodus ist nicht vorgesehen.

Punkt-zu-Multipunkt Verbindungen wiederum werden in lokalen Daten netzwerken aufgebaut, die nach dem LAN-Prinzip (local area network) funktionieren. Ein solches Netzwerk besteht in der Regel aus einem gemeinsamen Kommunikationsmedium, beispielsweise einem Koaxialkabel oder einer 4-Draht-Leitung, an dem alle LAN-Teilnehmer angeschlossen sind. In einem solchen Netzwerk ist aber keine Vermittlungsfunktion vorgesehen, sondern jedes gesendete Datenpaket wird im Punkt-zu-Multipunkt-Verfahren von jedem angeschlossenen Teilnehmer empfangen. Jeder einzelne Teilnehmer muß dann bei sich lokal die für ihn bestimmten Datenpakete aus dem ankommenden Strom von Sendungen herausfiltern. Daher ist bei jedem am LAN angeschlossenen Datenendgerät eine Filterfunktion im Teilnehmer implementiert. Nachteilig dabei ist, daß die gesamte Datenmenge bis zu jedem einzelnen Teilnehmer transportiert werden muß. Die Datenübertragungsrate, die im LAN zur Verfügung steht, ist jedoch begrenzt, so daß sich bei mehreren simultanen logischen Datenverbindungen sämtliche Sendungen die vorhandene Übertragungsrate teilen müssen. Dadurch kann es leicht zu einer Überlastung der Datenwege kommen.

Eine Verbesserung des LAN-Systems ist das sogenannte WLAN (wireless local area network), das in seiner Funktion dem LAN entspricht, als Übertragungsmedium jedoch Funkstrecken benutzt. Dies ermöglicht zwar eine höhere Mobilität der Endgeräte, jedoch um den Preis einer reduzierten Übertragungsrate gegenüber drahtgebundenem LAN (ca. 600 kbit effektiv bei WLAN gegenüber ca. 3 Mbit effektiv bei LAN). Auch ist die Wahrscheinlichkeit externer Störungen, insbesondere Funkstörungen, sehr viel höher als bei einem drahtgebundenen LAN.

Aus der DE 196 33 919 C1 ist die Aktualisierung von Programmteilen in einem Mobilfunkgerät über eine GSM-Schnittstelle unter Zuhilfenahme eines PC bekannt, wobei jedoch keine LAN-Funktion vorgesehen ist.

Die DE 196 00 961 A1 beschreibt ein Kabel-Fernseh-Verteilnetz mit zusätzlicher Anschlußmöglichkeit von Endgeräten eines Fernmeldenetzes, die auch drahtlos übertragen können. Eine WLAN-Funktion ist aber ebenfalls nicht möglich.

Aus der DE 196 01 472 A1 ist eine TK-Einrichtung mit Vermittlungsfunktion zwischen Sprachendgeräten sowie FAX-Geräten bekannt, bei der drahtlose Datenübertragung im Sprachband erfolgen kann. Eine digitale Datenübertragung, insbesondere eine WLAN-Funktion ist jedoch auch hier nicht möglich.

Die DE 195 39 507 A1 schließlich beschreibt ein digitales Mobilfunkgerät mit zusätzlicher digitaler Schnittstelle zum drahtlosen Anschluß von Endgeräten verschiedenster Art. Es ist jedoch ebenfalls kein WLAN-Betrieb mit einer einzigen derartigen Anlage möglich, sondern bestenfalls mit mindestens zwei solchen Anlagen unter Zuhilfenahme eines GSM-Netzes. Damit ist aber der Charakter eines lokalen Daten netzes, in welchem Datenendgeräte über die LAN-Funktion miteinander kommunizieren können, nicht gegeben.

Aufgabe der vorliegenden Erfindung ist es demgegenüber, ein digitales TK-System der eingangs genannten Art, wie es beispielsweise in "ALCATEL 4200 E" realisiert ist, dahingehend weiterzuentwickeln, daß auch LAN-Funktionen, insbesondere WLAN-Funktionen im Punkt-zu-Multipunkt-Verbindungsverfahren mit drahtloser Datenübertragung ermöglicht werden.

Erfindungsgemäß wird diese Aufgabe dadurch gelöst, daß auf der DECT-Steuereinheit ein Filter zur Filterung von Zieladressen von Datenpaketen implementiert ist, welches Routing-lnformation an die Vermittlungseinheit liefert, und daß mindestens zwei Datenendgeräte, insbesondere Personal Computer (PC), vorgesehen sind, von denen mindestens eines über eine drahtlose Verbindung mit der DECT-Basisstation kommunizieren kann.

Durch das Vorsehen einer entsprechend universell einsetzbaren DECT-Karte mit einer DECT-Funkstrecke kann das bei den bekannten LAN-Systemen erforderliche Kabel ersetzt werden, so daß eine WLAN-Funktion ermöglicht wird. Eine derartige Karte mit Datenschnittstelle und Modemschnittstelle auf der Interface-Seite der jeweiligen Datenendgeräte ermöglicht nicht nur eine schnurlose Datenübertragung, sondern kann von dem Datenendgeräten auch als Modem (z.B. Hayes) oder als LAN-Board (z.B. NE2000) angesprochen werden. Dabei kann die bekannte und auf dem Markt vielfältig und preiswert erhältliche DECT-Infrastruktur direkt und ohne Anpassung genutzt werden.

Im WLAN-Modus ist damit im Unterschied zu den oben diskutierten bekannten Lösungen, bei denen ohne Protokolländerung eine Datenweitergabe an eine Luftschnittstelle erfolgt, eine wesentlich geringere Übertragungskapazität bei gleicher Übertragungsleistung erforderlich. Jedes an das erfindungsgemäße digitale TK-System angeschlossene Datenendgerät verfügt nämlich exklusiv über seine eigene DECT-Strecke. Durch die auf der DECT-Steuereinheit implementierte Filterungsfunktion wird ein unnötiger Empfang von nicht für das jeweilige Endgerät bestimmten Datenpaketen frühzeitig abgeblockt, so daß die Übertragungsstrecken wesentlich weniger belastet werden.

Die Vermittlungseinheit und das Filter können beim erfindungsgemäßen digitalen TK-System als Hardware-Teile ausgeführt sein. Bevorzugt ist jedoch eine Ausführungsform, bei der die Vermittlungseinheit und/oder das Filter als Software-Programm vorliegt, was eine höhere Flexibilität, eine einfachere Nachrüstbarkeit und einen erheblich günstigeren Herstellungspreis gegenüber Hardware-Lösungen ermöglicht.

Ganz besonders bevorzugt ist eine Ausführungsform, bei der ein Datenbus vorgesehen ist, der mehrere DECT-Steuereinheiten miteinander verbindet. Dieses Bussystem kann den gesamten Datenverkehr, insbesondere die Übertragung von Datenpaketen regeln. Damit läßt sich auf einfache Weise die Anzahl der Anschlußmöglichkeiten für Basisstationen im System erheblich vergrößern, so daß eine größere Flächenabdeckung möglich wird. Insbesondere kann beispielsweise bei dem bekannten "ALCATEL 4200 E"-System der ohnehin vorhandene Signalisierungsbus, der bisher nur zur Signalisierung von Gesprächsverbindungen benutzt wurde, für die Datenübertragung zwischen den DECT-Steuereinheiten mitbenutzt werden.

Bei einer weiteren bevorzugten Ausführungsform ist die DECTBasisstation räumlich getrennt von der DECT-Steuereinheit angeordnet und über eine Leitung mit dieser verbunden. Im Gegensatz zu bekannten Lösungen, wie beispielsweise dem aus der oben zitierten DE_195_39_507_A1 bekannten digitalen Mobilfunkgerät ist damit eine ganz erheblich größere Flächenabdeckung aufgrund der räumlichen Trennung möglich. Die Kabellänge kann beispielsweise bei Verwendung von Glasfaserkabeln mehrere Kilometer betragen.

Bei einer weiteren besonders bevorzugten Ausführungsform des erfindungsgemäßen TK-Systems ist ein Bussystem zur Übertragung von digitalen Sprachsignalen vorgesehen, das mehrere DECT-Steuereinheiten miteinander verbindet. Dadurch können insbesondere auch Voice-Endgeräte, beispielsweise Telefone, FAX-Geräte etc. an das System angekoppelt werden.

Dazu können bei einer Weiterbildung entsprechende digitale Schnittstellen für die TK-Endgeräte, beispielsweise ISDN-Telefone, analoge Telefone, Telefax-Geräte, Personal Computer mit ISDN-Schnittstelle oder Komforttelefone vorgesehen werden.

Vorteilhaft ist es auch, wenn an das Bussystem zur Übertragung von digitalen Sprachsignalen ein Amtsverbindungssatz (AVS) zum Anschluß an ein drahtgebundenes Fernsprechnetz angeschlossen ist. Damit läßt sich eine Verbindung zu einem weitverzweigten Drahtnetz und damit beispielsweise ein Zugang zum Internet, eine Datenfernübertragung etc. realisieren.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1a: eine einfache Ausführungsform des erfindungsgemäßen digitalen TK-Systems in schematischer Darstellung;
- Fig. 1b: ein Funktionsschema einer Telekommunikationsanlage nach Art des Systems "Alcatel 4200 E" mit erfin dungsgemäßer Modifikation entsprechend Fig. 1a;
- Fig. 2: eine Ausführungsform mit Austausch der Daten pakete über einen ISB-Bus;
- Fig. 3: eine Ausführungsform mit HSB-Bus; und
- Fig. 4: eine Ausführungsform mit hardwaremäßiger Realisie rung der Vermittlungsfunktion und Filterfunktion.

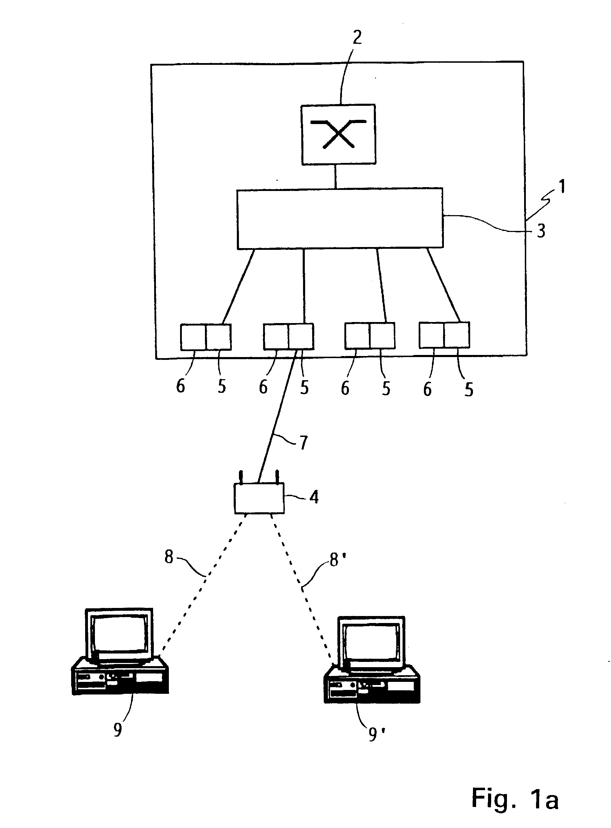

Bei dem in Fig. 1a gezeigten einfachen Ausführungsbeispiel des erfindungsgemäßen digitalen Telekommunikations-Systems ist eine schematisch gezeichnete DECT(= digital enhanced cordless telephone)-Steuereinheit 1 erkennbar, auf der eine Vermittlungseinheit 2 zur Herstellung von Datenverbindungen sowie ein Filter 3 zur Filterung von Zieladressen von Datenpaketen implementiert sind. Dabei liefert das Filter 3 Routing-lnformation an die Vermittlungseinheit 2.

Außerdem sind diverse MAC-ASIC (= Medium Access Controlapplication specific integrated circuit) Einheiten 5, also gemultiplexte anwendungsspezifische integrierte Schaltungen, an das Filter 3 angeschlossen, die jeweils über eine Signalleitung 7 eine DECT-Basisstation 4 bedienen und den jeweils zu sendenden Datenpaketen den Zugang zu den DECT-Zeitschlitzen ermöglichen. Gesteuert werden die MAC-ASIC-Einheiten 5 jeweils von einem CSP (= Cell site processor) 6, der die DECT-Cell site functions beinhaltet.

Über eine Funkstrecke 8, 8' kommunizieren in dem in Fig. 1a gezeigten Ausführungsbeispiel zwei Datenendgeräte 9, 9' in Form von Personal Computern drahtlos mit der DECT-Basisstation 4. Die Kommunikation erfolgt im WLAN(wireless local area network)-Modus nach dem Punkt-zu-Multipunkt-Verfahren, wobei jedoch durch das Filter 3 die nicht betroffenen MAC-ASIC-Einheiten 5 sowie die daran angeschlossenen, in der Figur nicht dargestellten DECT-Basisstationen und die entsprechenden Funkstrecken nicht mit dem Transport dieser Datenpakete belastet werden, da nur eine Verbindung zwischen den beiden Datenendgeräten 9 und 9' aufrechterhalten werden soll.

Die Vermittlungseinheit 2 und/oder das Filter 3 können jeweils entweder in Hardwareform oder als Software-Programm vorliegen.

Durch Variation der Leitung 7 können unterschiedliche Anforderungen an die Flächenabdeckung mit den Basisstationen 4 realisiert werden.

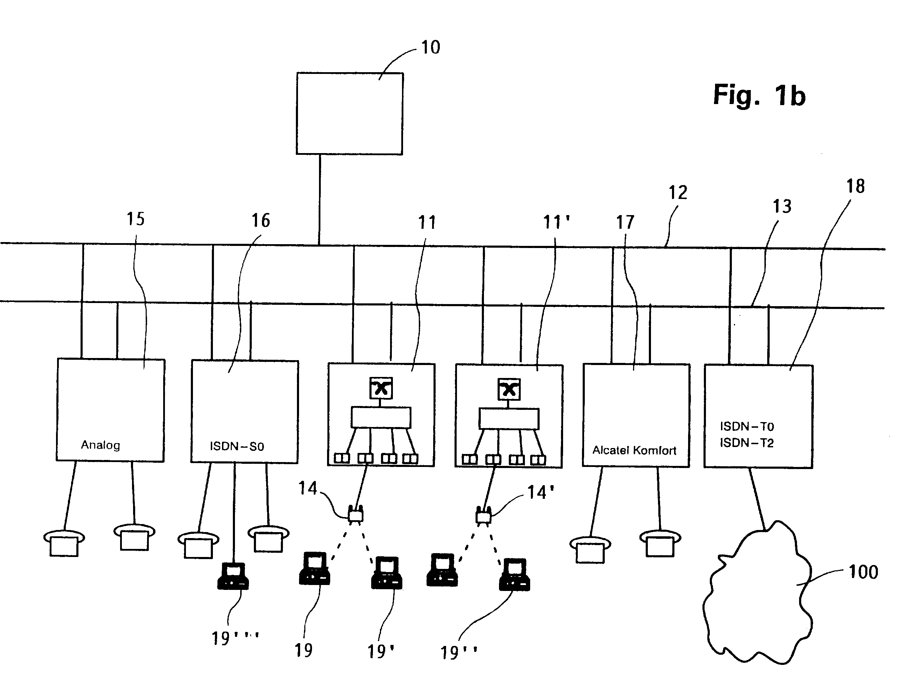

In Fig. 1b ist das erfindungsgemäße digitale TK-System in eine größere Anlage integriert dargestellt, die noch weitere digitale Schnittstellen für andere TK-Endgeräte umfaßt, nämlich im gezeigten Beispiel eine Analog-Schnittstelle 15 für analoge Telefone, eine ISDN-SO-Schnittstelle 16 an die neben Telefonen und FAX-Geräten beispielsweise auch ein Personal Computer 19"' angeschlossen sein kann, sowie eine Schnittstelle 17 für Komforttelefone. Über einen Amtsverbindungssatz 18 ist die Anlage auch an ein drahtgebundenes Fernsprechnetz 100 angebunden.

Die digitalen Schnittstellen 15, 16, 17, der Amtsverbindungssatz 18 und die DECT-Steuereinheiten 11, 11' sind untereinander jeweils durch einen Datenbus 12 verbunden, an dem eine zentrale Steuereinheit 10 angeschlossen ist, und über den Datenpakete beispielsweise mit einer Übertragungsrate von 2_Mbit übertragen werden können. Bei Verwendung einer Anlage vom Typ "Alcatel 4200 E" kann der Datenbus 12 durch den dort ohnehin vorhandenen Signalisierungsbus körperlich realisiert sein.

Des weiteren ist bei der Anlage nach Fig. 1b ein Bussystem 13 vorgesehen, das ebenfalls die digitalen Schnittstellen 15, 16, 17, den Amtsverbindungssatz 18 sowie die DECT-Steuereinheiten 11, 11' untereinander verbindet. Dieses Bussystem wird in der Regel als HSB (high speed bus) ausgebildet sein und kann Sprachinformationen mit einer Übertragungsrate von 16_Mbit transportieren.

Bei dem in Fig. 1b gezeigten Ausführungsbeispiel können z.B. die beiden an der gleichen DECT-Basisstation 14 über Funkstrecken angeschlossenen Datenendgeräte 19 und 19' miteinander kommunizieren, beispielsweise aber auch das Datenendgerät 19 über die DECT-Basisstation 14, die DECT-Steuereinheit 11, den Datenbus 12, die DECT-Steuereinheit 11' und die DECT-Basisstation 14' und eine entsprechende Funkstrecke mit einem anderen Datenendgerät 19".

Der zweite Partner der Verbindung kann auch, wie im Falle des Datenendgeräts 19"', direkt mit einer entsprechenden Schnittstelle (im gezeigten Beispiel der ISDN-SO-Schnittstelle 16) über die DECT-Steuereinheit 11 mit dem Datenendgerät 19 kommunizieren.

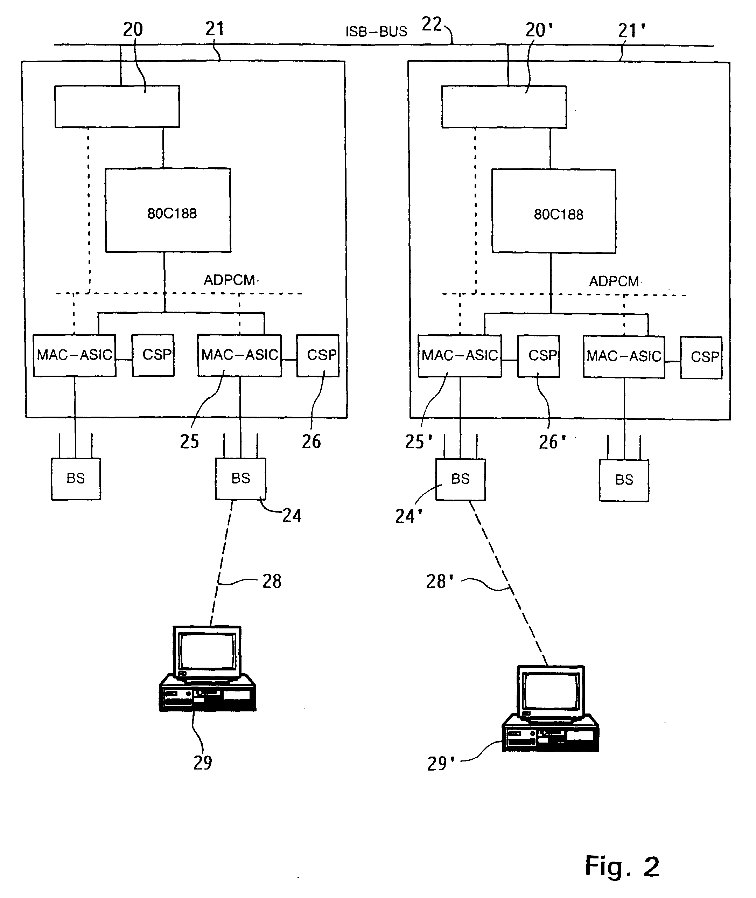

Bei den im folgenden diskutierten Figuren 2, 3 und 4 ist der normale Datenweg innerhalb einer DECT-Karte jeweils mit durchgehenden Strichen, der Pfad für kontinuierliche Daten hingegen kleingestrichelt eingezeichnet.

Fig. 2 zeigt ein Ausführungsbeispiel, bei dem zwei DECTSteuereinheiten 21, 21' über einen ISB-Bus 22 miteinander verbunden sind. Diese Konfiguration kann beispielsweise ohne Änderung der Hardware mittels einer Anlage vom Typ "Alcatel 4200 E" realisiert werden. Die DECT-Steuereinheiten 21 bzw. 21' weisen jeweils einen Interface-Chip 20 bzw. 20' auf, der den Zugang zum Datenbus 22 ermöglicht. Als zentrale Rechnereinheit enthalten die DECT-Steuereinheiten 21, 21' jeweils einen Mikroprozessor vom Typ 80C188 der Firma Intel, der die Steuer- und Filterfunktionen übernehmen kann. Eine Verbindung mit den Basisstationen 24, 24' ist wiederum über MAC_ASIC-Einheiten 25, 25' vorgesehen, die jeweils von einem Prozessor 26 bzw. 26' gesteuert werden, der die DECT-Cell site functions beinhaltet. Über eine ADPCM-"Datenautobahn", die als Drahtverbindung mit ADPCM-Zeitschlitzen ausgeführt ist, sind die MAC-ASIC-Einheiten 25 bzw. 25' in einer DECTSteuereinheit 21 bzw. 21' untereinander bzw. mit dem jeweiligen Interface-Chip 20 bzw. 20' verbunden.

Wie bereits beim Beispiel nach Fig. 1a beschrieben, ermöglichen die MAC-ASIC-Einheiten 25, 25' jeweils den Zugang zu DECT-Zeitschlitzen in einer DECT-Basisstation 24, 24', an der jeweils über eine Funkstrecke 28 bzw. 28' ein Datenendgerät 29 bzw. 29' angeschlossen ist.

Bei dem in Fig. 2 gezeigten Ausführungsbeispiel wird ganz am Anfang, wenn der PC 29 gestartet und der Netzwerkadapter initialisiert ist, eine speziell markierte DECT-Verbindung zu einem der "Alcatel 4200 E"-Interface-Boards aufgebaut. Diese Verbindung wird nicht der zentralen Steuereinheit gemeldet, sondern die Daten dafür werden in der DECT-Steuereinheit 21 gespeichert. Die zentrale Steuereinheit wird also im weiteren Verlauf keine Kenntnisse über diese Verbindung haben. Während des Aufbaus dieser speziellen Verbindung wird die eigene Adresse des PC 29, die möglicherweise von der IPUI-N artigen Luftnetz-Adresse abgeleitet wird, zur DECT-Steuereinheit 21 übermittelt und dort gespeichert. Diese Adresse wird später benötigt, um alle Datenpakete für diesen PC 29 herauszufiltern.

Die Sendung von Datenpaketen erfolgt in einem Einzelschlitz (32_Kbits) oder in einem Doppelschlitz (64_Kbits). Die Pakete werden von der DECT-Steuereinheit 21 von den B-Feldern entnommen oder in diese eingespeist durch Aufnahme der Empfangs- und Sendepuffer des MAC-ASIC 25.

Die Datenpakete werden zwischen den Karten 21, 21' über den ISB-Bus 22 ausgetauscht, wobei der ISB-Sendemechanismus ausgenutzt wird. Jede DECT-Steuereinheit 21, 21' wird alle Datenpakete empfangen, jedoch nur diejenigen Pakete herausfiltern, welche für ihre "Klienten" bestimmt sind. Dies sollte auf jeden Fall gemacht werden, um den Datenverkehr auf den DECT-Luftschnittstellen zu reduzieren.

Für kontinuierliche 64 Kbits-Verbindungen (beispielsweise Video-Übermittlungen) kann eine direkte Punkt-zu-Punkt-Verbindung benutzt werden. Die Daten werden dann nicht vom B-Feld entnommen, sondern über zwei benachbarte Zeit-Schlitze auf der ADPCM-"Autobahn" zum Interface-Chip 20 geschaltet und von dort über den HSB-Zeitschlitz an die andere Karte 21' weitergeleitet.

Vorteilhafterweise sind bei dieser Ausführungsform keine Hardwareveränderungen erforderlich. Die zentrale Steuereinheit wird nicht mit den Benutzerdaten belastet, so daß eine Reduzierung von Voice-Sets bei ALCATEL 4200 E nicht erfolgt. Außerdem ist kein großer Implementierungsaufwand auf Seiten der DECT-Steuereinheit erforderlich.

Weiterhin ist vorteilhaft, daß keine Konfigurationsdaten auf den DECT-Steuereinheiten 21, 21' benötigt werden. Da auf dem ISB-Bus ein Broadcast-Mechanismus (DECT-Gruppe) benutzt wird, ist es nicht notwendig, daß sich die DECT-Steuereinheiten gegenseitig kennen. Die DECT-Steuereinheiten 21, 21' und der ISB-Bus 22 sind transparent für die Datenpakete, so daß keine Abhängigkeit von dem benutzten Netzwerkprotokoll besteht.

Außerdem wird kein Switching-Aufwand für die Datenpakete erforderlich. Weiter besteht die Möglichkeit, die Übertragungsrate auf der Luftschnittstelle (32/64 Kbits) zu wählen. Schließlich ist kein Einfluß der bei der zentralen Steuereinheit benutzten Software zu befürchten, so daß keine Abhängigkeit von der jeweiligen Software-Version besteht.

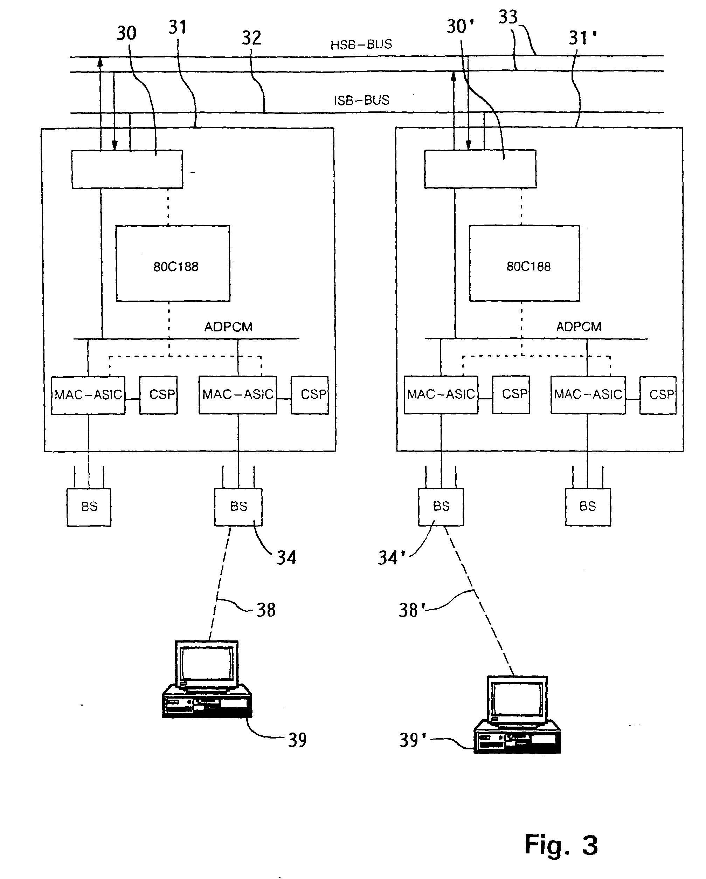

Fig. 3 zeigt ein weiteres Ausführungsbeispiel der Erfindung, das ebenfalls ohne Hardware-Änderung in einer Anlage vom Typ "Alcatel 4200 E" verwirklicht werden kann. Die PC-Seite entspricht exakt der in Fig. 2 dargestellten.

Die Übermittlung der Datenpakete kann bei diesem Ausführungsbeispiel nur in einem Doppelschlitz (64_Kbits) erfolgen. Die Pakete werden auf die ADPCM-Autobahn geschaltet, von einem ADPCM-Transcoder gebypasst und von der DECT-Steuereinheit 31 zu einer anderen DECT-Steuereinheit 31' über ein HSB-Bussystem 33 gesendet. Die Datenpakete werden zwischen den DECT-Steuereinheiten 31,31' über das HSB-Bussystem 33 mittels Interface-Chips 30, 30' mit einer entsprechenden Schaltmatrix ausgetauscht. Lediglich die konkret angesprochenen DECT-Steuereinheiten 31,31' empfangen dabei die entsprechenden Datenpakete. Vor jeder Verbindung oder jedem Datenpaket muß ein Schaltvorgang auf dem HSB-Bus erfolgen.

Zusätzlich ist auch die oben beschriebene Verbindung der DECT-Steuereinheiten 31, 31' über einen ISB-Bus 32 vorgesehen. Die Datenpakete werden ab den DECT-Basisstationen 34, 34' wieder über Funkstrecken 38, 38' an die Datenendgeräte 39, 39' und vice versa gesendet.

Einige der HSB-Zeitschlitze müssen für Datenserviceleistungen reserviert bleiben. Dafür sind Softwareänderungen an der zentralen Steuereinheit erforderlich, was allerdings zur Folge hat, daß die Datenanwendungen nicht mehr unabhängig von der Software-Version der zentralen Steuereinheit sind.

Vorteilhafterweise muß auch bei dieser Ausführungsform die zentrale Steuereinheit die Benutzerdaten nicht kennen. Daher bleibt auch hier die Anzahl der möglichen Voice-Sets bei Verwendung einer Anlage vom Typ "Alcatel 4200 E" unangetastet.

Es werden auch keine Konfigurationsdaten in der zentralen Steuereinheit benötigt, wobei allerdings einige reservierte HSB-Zeitschlitze nicht für die normale Übertragung von Datenpaketen genutzt werden können.

Die DECT-Steuereinheiten 31, 31' sind vorteilhafterweise wiederum nur transparent für Datenpakete mit bekannten Protokollen.

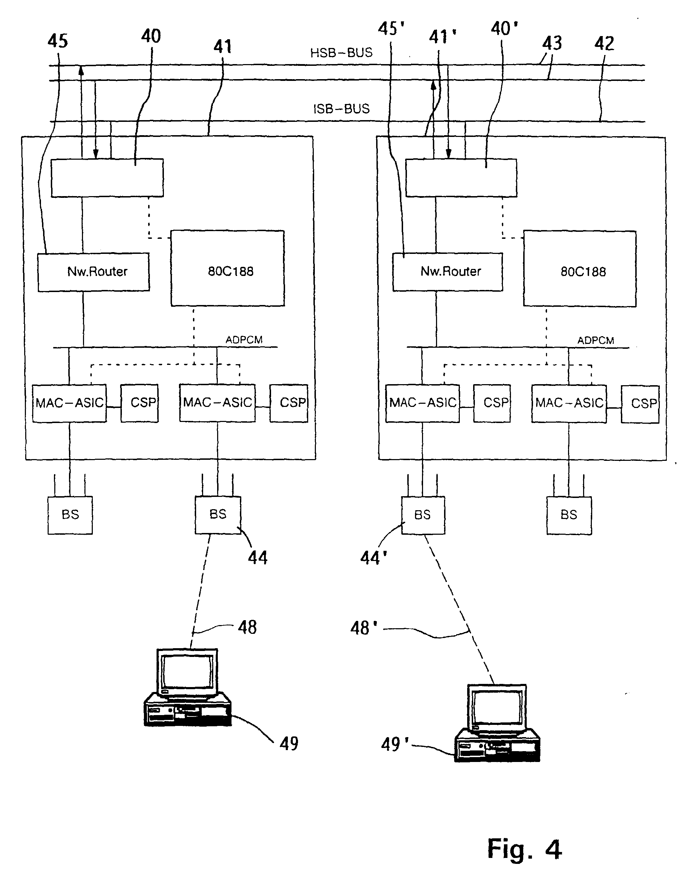

Fig. 4 schließlich stellt schematisch eine Ausführungsform dar, die sich für höhere Datenübertragungsraten (64_Kbits, aber mehr Datenpakete pro Zeiteinheit) eignet, jedoch größere Änderungen an der Hardware der DECT-Steuereinheiten 41, 41' erforderlich macht, die wie in dem Ausführungsbeispiel von Fig. 3 jeweils über einen Interface-Chip 40 bzw. 40' Zugang zum ISB-Bus 42 und zum HSB-Bussystem 43 erhalten.

Die Datenpakete werden in diesem Ausführungsbeispiel nicht von den B-Feldern durch die Recheneinheiten herausgezogen, sondern auf spezielle Netzwerk-Chips 45, 45' geschaltet, die normalerweise als Netzwerk-Router eingesetzt werden. Diese Netzwerkchips 45, 45' beinhalten sowohl die Vermittlungsals auch die Filterfunktion in Hardwareform, können Adressen von Datenpaketen herausfiltern und in mehr als einen B-Kanal "hineinhören". Rechnerunterstützung benötigen die NetzwerkChips 45, 45' lediglich für ihre Konfigurierung.

Der Austausch von Daten paketen zwischen Datenendgeräten 49, 49' erfolgt, wie bereits oben beschrieben, zunächst über Funkstrecken 48, 48' und DECT-Basisstationen 44, 44' sowie die jeweils zuständigen DECT-Steuereinheiten 41, 41' und zwischen diesen normalerweise auf dem HSB-Bussystem 43. Ein zusätzlicher Schaltvorgang wird nicht vorgenommen. Es gibt jeweils mindestens einen HSB-Zeitschlitz in jeder Karte zu jeder anderen Karte. Das bedeutet, daß es mindestens einen Zeitschlitz pro Karte gibt, wo alle von dieser Karte kommenden Daten übermittelt werden. Alle anderen Karten werden diese Zeitschlitze lesen und die oben erwähnten Chips werden die Datenpakete herausziehen, falls sie benötigt werden. Auf diese Weise gibt es keinen Schaltaufwand bei der Steuereinheit und keinen Betriebsaufwand für Filterungsvorgänge.

Vorteilhafterweise muß auch bei dieser Ausführungsform die zentrale Steuereinheit die Benutzerdaten nicht kennen, so daß wiederum die Anzahl von möglichen Voice-Sets unangetastet bleibt. Auch hier werden wiederum keine Konfigurationsdaten auf der zentralen Steuereinheit benötigt, wobei einige HSB-Zeitschlitze reserviert bleiben müssen. Die DECT-Steuereinheiten 41, 41' sind wiederum nur transparent für Datenpakete mit bekannten Protokollen. Es gibt keine Einflüsse auf die Datenübertragungsraten aufgrund des hochratigen Telefonverkehrs und umgekehrt. Auch der Prozessor 80C188 wird nicht sonderlich belastet, da die meiste Arbeit durch das Chip-Set für das Luftnetz übernommen wird.

## Patentansprüche

1. Digitales Telekommunikations (TK)-System mit mindestens einer DECT (=digital enhanced cordless telephone) Steuereinheit (1; 11, 11'; 21, 21'; 31, 31'; 41, 41'), die mindestens eine DECT-Basisstation (4; 14, 14'; 24, 24'; 34, 34'; 44, 44') steuert und auf der eine Vermittlungseinheit (2) implementiert ist,
**dadurch gekennzeichnet**, daß auf der DECT-
Steuereinheit (1; 11, 11'; 21, 21'; 31, 31'; 41, 41') ein Filter (3) zur Filterung von Zieladressen von Datenpaketen implementiert ist, welches Routing-lnformation an die Vermittlungseinheit (2) liefert, und daß mindestens zwei Datenendgeräte (9, 9'; 19, 19', 19", 19"'; 29, 29'; 39, 39'; 49, 49'), insbesondere Personal Computer (PC), vorgesehen sind, von denen mindestens eines über eine drahtlose Verbindung (8, 8'; 28, 28'; 38, 38'; 48, 48') mit der DECT-Basisstation (4; 14, 14'; 24, 24'; 34, 34'; 44, 44') kommunizieren kann.

2. Digitales TK-System nach Anspruch 1, dadurch gekennzeichnet, daß die Vermittlungseinheit (2) und/oder das Filter (3) als Software-Programm vorliegt.

3. Digitales TK-System nach Anspruch 1 oder 2, dadurch gekennzeichnet, daß ein Datenbus (12; 22; 32; 42) vorgesehen ist, der mehrere DECT-Steuereinheiten (11, 11'; 21, 21'; 31, 31'; 41, 41') miteinander verbindet.

4. Digitales TK-System nach einem der vorhergehenden Ansprüche, dadurch gekennzeichnet, daß die DECT-Basisstation (4; 14, 14'; 24, 24'; 34, 34'; 44, 44') räumlich getrennt von der DECT-Steuereinheit (1; 11, 11'; 21, 21'; 31, 31'; 41, 41') angeordnet und über eine Leitung (7) mit ihr verbunden ist.

5. Digitales TK-System nach einem der vorhergehenden Ansprüche, dadurch gekennzeichnet, daß ein Bussystem (13; 33; 43) zur Übertragung von digitalen Sprachsignalen vorgesehen ist, das mehrere DECT-Steuereinheiten (11, 11'; 31, 31'; 41, 41') miteinander verbindet.

6. Digitales TK-System nach Anspruch 5, dadurch gekennzeichnet, daß an das Bussystem (13; 33; 43) zur Übertragung von digitalen Sprachsignalen digitale Schnittstellen (15, 16, 17) für TK-Endgeräfe, z.B. ISDN-Telefone, analoge Telefone, FAX-Geräte, PCs mit ISDN-Schnittstelle oder Komforttelefone angeschlossen sind.

7. Digitales TK-System nach Anspruch 5 oder 6, dadurch gekennzeichnet, daß an das Bussystem (13; 33; 43) zur Übertragung von digitalen Sprachsignalen ein Amtsverbindungssatz (18) zum Anschluß an ein drahtgebundenes Fernsprechnetz (19) angeschlossen ist.
